# EUROPÄISCHE PATENTSCHRIFT

(11) **EP 3 265 265 B1**
(45) Veröffentlichungstag und Bekanntmachung des Hinweises auf die Patenterteilung: **15.07.2020**
(21) Anmeldenummer: 16708619.8
(22) Anmeldetag: 23.02.2016
(51) Int. Cl.: B23K 20/04

(54) **VERFAHREN ZUM HERSTELLEN EINES WERKSTOFFVERBUNDS UND PROVISORISCHER VERBUND**
METHOD FOR PRODUCING A COMPOSITE MATERIAL, AND A PROVISIONAL COMPOSITE
PROCÉDÉ DE PRODUCTION D'UN COMPOSITE, ET COMPOSITE PROVISOIRE

(30) Priorität: 02.03.2015 DE 102015102961
(43) Veröffentlichungstag der Anmeldung: 10.01.2018
(73) Patentinhaber: ThyssenKrupp Steel Europe AG, 47166 Duisburg (DE); thyssenkrupp AG, 45143 Essen (DE)
(72) Erfinder: BECKER, Jens-Ulrik, 47058 Duisburg (DE); KLENN, Rainer, 47249 Duisburg (DE); MYSLOWICKI, Stefan, 41238 Mönchengladbach (DE); WUNDERLICH, Roland, 59192 Bergkamen (DE)
(74) Vertreter: Kutzenberger Wolff & Partner
(86) Internationale Anmeldenummer: PCT/EP2016/053736
(87) Internationale Veröffentlichungsnummer: WO 2016/139083

(56) Entgegenhaltungen:
- DE-B3-102005 006 606
- JP-A- S5 886 993
- JP-A- S56 122 681
- US-A- 2 159 043
- US-A- 2 757 444
- US-A- 3 150 445

## Beschreibung

### Stand der Technik

Die vorliegende Erfindung betrifft ein Verfahren zum Herstellen eines Werkstoffverbunds und einen provisorischen Verbund.

Aus dem Stand der Technik sind hinlänglich Verfahren bekannt, bei denen durch ein Warmwalzen zwei Brammen aus unterschiedlichen Materialen miteinander zu einem Werkstoffverbund kombiniert werden, um gezielt Eigenschaften des Werkstoffverbunds einstellen oder realisieren zu können. Typischerweise werden die Verbundpartner mit gleicher Größe übereinander angeordnet und umlaufend miteinander verschweißt, um die Zunderbildung zu unterdrücken und die zusammengesetzten Verbundpartner möglichst sicher zur Warmwalzvorrichtung zu transportieren. Da die Brammen in der Regel Unebenheiten aufweisen, kann es beim Verschweißen zur Bildung von Luftkammern kommen, die sich auch noch nach dem Warmwalzen als Blasen zwischen den Verbundpartnern finden lassen.

Um dieser Blasenbildung entgegenzuwirken, kennt der Stand der Technik, beispielsweise aus der Druckschrift EP 0 004 063, Verfahren, bei denen aufwendig versucht wird, die Luft zwischen den Werkstücken zu evakuieren, bevor die Verbundpartner zu einem Werkstoffverbund gewalzt werden. Die US2159043 offenbart ein Verfahren zur Bearbeitung zweier Werkstücke aus Metall.

### Offenbarung der Erfindung

Es ist eine Aufgabe der vorliegenden Erfindung, ein Verfahren zur Verfügung zu stellen, mit dem sich möglichst einfach die Blasenbildung bei der Herstellung eines Werkstoffverbunds, insbesondere eines Stahlwerkstoffverbunds, unterdrücken lässt.

Die Aufgabe wird gelöst durch ein Verfahren zum Herstellen eines Werkstoffverbunds, insbesondere eines Stahlwerkstoffverbunds, aufweisend die Verfahrensschritte gemäß Anspruch 1. Gegenüber dem Stand der Technik hat das erfindungsgemäße Verfahren den Vorteil der stoffschlüssigen Verbindung, die derart konfiguriert wird, dass sich diese Verbindung beim Walzen, insbesondere beim Warmwalzen, wieder löst. Dadurch kann Luft, die in möglichen Luftkammern zwischen dem ersten Werkstück und dem zweiten Werkstück eingeschlossen ist, beim Walzen aus diesen Kammern herausgedrückt werden und verlässt über die geöffnete Sollbruchstelle den Bereich zwischen dem ersten Werkstück und dem zweiten Werkstück. Auf diese Weise lässt sich auf einfache Weise die Blasenbildung unterdrücken, ohne dass man auf einen aufwendigen zusätzlichen Verfahrensschritt wie z. B. ein Evakuieren angewiesen ist.

Vorzugsweise wird durch das Walzen, insbesondere das Warmwalzen, ein Blech, insbesondere ein Blechband, erzeugt. Dazu ist es insbesondere vorgesehen, dass das erste Werkstück und/oder das zweite Werkstück Brammen sind, die zeitlich vor dem Erzeugen der stoffschlüssigen Verbindung zur Bildung eines Brammenpakets aufeinander gestapelt werden. Es ist aber auch vorstellbar, dass das erste Werkstück und /oder das zweite Werkstück ein Vorblech ist. Die stoffschlüssige Verbindung, beispielsweise eine Schweißnaht, wird dabei vorzugsweise teilweise oder vollständig umlaufend entlang der Außenseite des zusammengesetzten Pakets aus erstem und zweitem Werkstück erzeugt, insbesondere in einem Bereich, in dem das erste und das zweite Werkzeugstück aneinander liegen.

Vorteilhafte Ausgestaltungen und Weiterbildungen der Erfindung sind den Unteransprüchen sowie der Beschreibung unter Bezugnahme auf die Zeichnungen entnehmbar.

Gemäß einer weiteren Ausführungsform der vorliegenden Erfindung ist vorgesehen, dass der provisorische Verbund mittels eines Dichtmittels im Wesentlichen hermetisch abgedichtet wird. Insbesondere ist es vorgesehen, dass das Dichtmittel in Bereichen des provisorischen Verbunds ohne stoffschlüssige Verbindung eingefügt bzw. aufgestrichen wird. Dadurch lässt sich vermeiden, dass Luft zwischen das erste Werkstück und das zweite Werkstück gelangt und so die Zunderbildung unterstützt. Dabei wird vorzugsweise ein hitzebeständiges Dichtmittel verwendet, das den bei dem Herstellungsverfahren herrschenden Temperaturen, insbesondere der Temperatur im Ofen, in den der provisorische Verbund für das Warmwalzen eingeführt wird, widersteht. Beispielsweise handelt es sich um einen Lack, eine Schlichte und/oder eine Paste, mit der ein Bereich ohne stoffschlüssige Verbindung gefüllt und/oder abgedeckt wird. Als Dichtmittel ist auch eine Heißklebepaste oder ein Reparaturkitt für ein Fahrzeug denkbar. Vorzugsweise ist das Dichtmittel ein feuerfester Kitt, ein feuerfester Kleber, oder ein anderes feuerfestes Gemisch. Insbesondere umfasst das Dichtmittel metallische Oxide, Nitride, Silikate und/oder mineralische Baustoffe, wie z.B. Aluminiumoxid, Zirkonoxid, Magnesiumoxid, Bornitrit, Zirkonsilikat, Korund, Magnesit und/oder Aluminiumsilikate.

Gemäß einer weiteren Ausführungsform der vorliegenden Erfindung ist vorgesehen, dass das erste Werkstück und das zweite Werkstück unter Bildung einer Kontaktfläche zueinander angeordnet werden und vorzugsweise entlang eines Randbereichs der Kontaktfläche umlaufend miteinander stoffschlüssig verbunden, insbesondere verschweißt, werden.

Gemäß einer weiteren Ausführungsform ist vorgesehen, dass zur Realisierung der Sollbruchstelle eine Belastungsfähigkeit der stoffschlüssigen Verbindung, insbesondere entlang des Umfangs des provisorischen Verbunds, räumlich moduliert wird. Dabei ist vorzugsweise unter Belastungsfähigkeit die Reißfestigkeit der stoffschlüssigen Verbindung gegenüber Scher-, Zug- und/oder Druckkräften gemeint oder die Belastungsfähigkeit wird allgemein durch eine Zerstörschwelle der stoffschlüssigen Verbindung festgelegt. Die Belastungsfähigkeit der stoffschlüssigen Verbindung wird beispielsweise auch durch eine Unterbrechung der stoffschlüssigen Verbindung entlang der sonst umlaufenden Verbindung realisiert oder eine vollständig umlaufende stoffschlüssige Verbindung wird in bestimmten Bereichen gezielt geschwächt oder durch zusätzliche stoffschlüssige Verbindungen weiter gestärkt. Insbesondere ist vorgesehen, dass ein Bereich mit einer ersten Belastungsfähigkeit, insbesondere mit einer ersten Zerstörschwelle, und ein Bereich mit einer zweiten Belastungsfähigkeit, insbesondere mit einer zweiten Zerstörschwelle, beim Erzeugen der stoffschlüssigen Verbindung realisiert werden, wobei die erste Belastungsfähigkeit geringer ist als die zweite Belastungsfähigkeit bzw. die zweite Zerstörschwelle größer ist als die erste Zerstörschwelle. Der Bereich mit der ersten Belastungsfähigkeit bildet dann bevorzugt den Bereich der Sollbruchstelle.

Gemäß einer weiteren Ausführungsform der vorliegenden Erfindung ist vorgesehen, dass zum Erzeugen der stoffschlüssigen Verbindung ein Verbindungsmaterial, beispielsweise Schweißmaterial, verwendet wird. Dabei kontaktiert das Verbindungsmaterial vorzugsweise sowohl das erste Werkstück als auch das zweite Werkstück. Insbesondere ist eine Aussparung vorgesehen, in die das Verbindungsmaterial zur Bildung der stoffschlüssigen Verbindung eingelassen wird und vorzugsweise so angeordnet wird, dass das Verbindungsmaterial die Aussparung bündig abschließt. Beispielsweise wird das Verbindungsmaterial durch eine Schweißraupe realisiert.

Gemäß einer weiteren Ausführungsform der vorliegenden Erfindung ist vorgesehen, dass das Verbindungsmaterial zumindest teilweise mehrlagig zum Erzeugen einer stoffschlüssigen Verbindung aufgetragen wird. Durch ein mehrlagiges Anordnen lässt sich die stoffschlüssige Verbindung gegenüber einer einfachen Lage des Verbindungsmaterials hinsichtlich der Belastungsfähigkeit erhöhen. Gemäß einer weiteren Ausführungsform der vorliegenden Erfindung ist vorgesehen, dass mittels der Anzahl an Lagen von Verbindungsmaterial entlang der stoffschlüssigen Verbindungen die Belastungsfähigkeit moduliert wird. Insbesondere ist es vorgesehen, dass in einem Bereich mit der ersten Belastungsfähigkeit eine oder keine Lage des Verbindungsmaterials angeordnet wird und in einem Bereich mit der zweiten Belastungsfähigkeit wird mindestens eine Lage des Verbindungsmaterials mehr angeordnet als im Bereich mit der ersten Belastungsfähigkeit. Dabei ist es vorstellbar, dass eine erste Lage, eine zweite Lage und/oder eine dritte Lage entlang des provisorischen Verbunds vollständig oder partiell umlaufend angeordnet werden.

Gemäß einer weiteren Ausführungsform der vorliegenden Erfindung ist es vorgesehen, dass das erste Werkstück und das zweite Werkstück zeitlich vor dem Erzeugen der stoffschlüssigen Verbindung zumindest teilweise gereinigt werden. Insbesondere werden das erste Werkstück und das zweite Werkstück jeweils an denjenigen Seitenflächen gereinigt, insbesondere gestrahlt, die im provisorischen Verbund aneinander liegen. Durch das Reinigen lässt sich in vorteilhafter Weise vermeiden, dass Verunreinigungen im Werkstoffverbund nach dem Walzen eingeschlossen werden.

Ein weiterer Gegenstand ist ein provisorischer Verbund aus einem ersten Werkstück, insbesondere eine Bramme und/oder ein Vorblech, und einem zweiten Werkstück zum Herstellen eines Werkstoffverbunds, insbesondere eine Bramme und/oder ein Vorblech, wobei der provisorische Verbund eine als Sollbruchstelle dienende stoffschlüssige Verbindung, vorzugsweise eine Schweißnaht, aufweist.

Die Nutzung eines solchen provisorischen Verbunds hat gegenüber dem Stand der Technik den Vorteil, dass beim Walzen aus der geöffneten Sollbruchstelle Luft austreten kann, die andernfalls zu einer Blasenbildung im Werkstoffverbund führen würde.

Vorzugsweise bilden das erste Werkstück und das zweite Werkstück ein Brammenpaket und der provisorische Verbund ist als Halbzeug für die Herstellung eines Blechs, insbesondere eines Blechbandes vorgesehen. Weiter verläuft die stoffschlüssige Verbindung vollständig oder partiell entlang des Umfangs des provisorischen Verbunds, insbesondere im Bereich einer Schnittstelle zwischen dem ersten Werkstück und dem zweitem Werkstück. Weiterhin ist es vorgesehen, dass die stoffschlüssige Verbindung räumlich moduliert ist und/oder die Belastungsfähigkeit der stoffschlüssigen Verbindung ist räumlich moduliert.

Es ist vorgesehen, dass der provisorische Verbund zum hermetischen Versiegeln ein Dichtmittel aufweist. Dabei ist das Dichtmittel bevorzugt in Bereichen ohne stoffschlüssige Verbindung, insbesondere ohne Verschweißung, angeordnet.

Dadurch wird in vorteilhafter Weise vermieden, dass Zunderbildung durch Luft, die durch den Bereich ohne stoffschlüssige Verbindung eintritt, veranlasst wird.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsform der Erfindung, welche den Erfindungsgedanken nicht einschränken. Die Erfindung ist das, was in den Ansprüchen definiert ist.

### Kurze Beschreibung der Figuren

Die **Figur 1** zeigt einen provisorischen Verbund zwischen einem ersten und einem zweiten Werkstück gemäß dem Stand der Technik (oben) und gemäß einer beispielhaften Ausführungsform der vorliegenden Erfindung (unten) im direkten Vergleich.

Die **Figur 2** zeigt eine beispielhafte stoffschlüssige Verbindung für einen provisorischen Verbund gemäß der beispielhaften Ausführungsform der vorliegenden Erfindung.

### Ausführungsformen

In den verschiedenen Figuren sind gleiche Teile stets mit den gleichen Bezugszeichen versehen und werden daher in der Regel auch jeweils nur einmal benannt bzw. erwähnt.

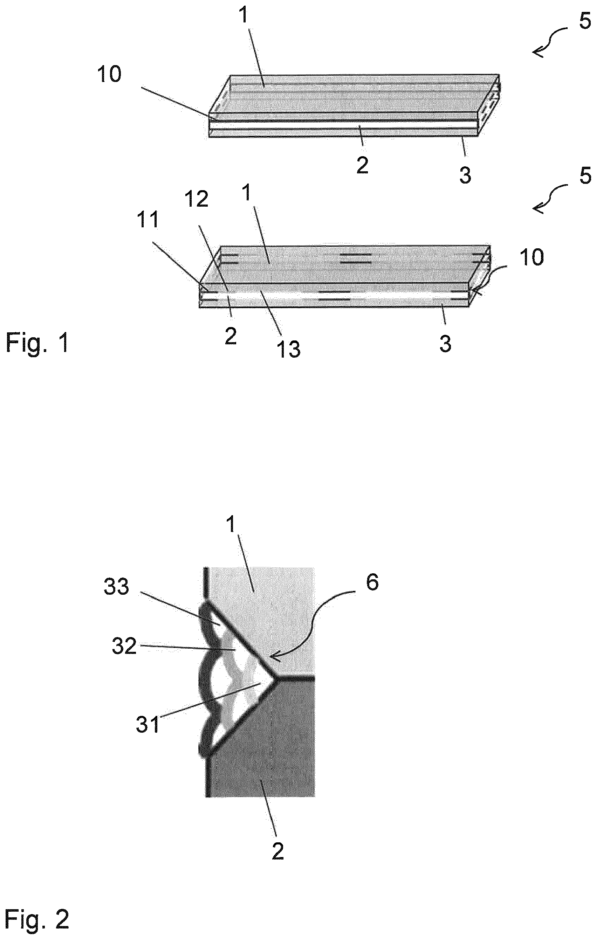

In **Figur 1** sind im direkten Vergleich ein provisorischer Verbund aus einem ersten Werkstück 1 und einem zweiten Werkstück 2 gemäß dem Stand der Technik und gemäß einer beispielhaften Ausführungsform der vorliegenden Erfindung dargestellt. Ein solcher provisorischer Verbund 5 wird vorzugsweise durch ein Walzen, insbesondere Warmwalzen, zu einem Werkstoffverbund, insbesondere zu einem Stahlwerkstoffverbund, weiterverarbeitet, wobei durch die Verwendung verschiedener Materialien für das erste Werkstück 1 und das zweite Werkstück 2 gezielt Materialeigenschaften für den Werkstoffverbund eingestellt werden. Zur Bildung des provisorischen Verbunds 5 werden ein erstes Werkstück 1, beispielsweise in Form einer Bramme oder eines Vorblechs, und ein zweites Werkstück 2, beispielsweise in Form einer weiteren Bramme oder eines weiteren Vorblechs, entlang einer gemeinsamen Kontaktfläche aneinandergelegt. Vorzugsweise werden das erste Werkstück 1 und das zweite Werkstück 2, beispielsweise unter Bildung eines mehrlagigen Brammenpakets, im Wesentlichen deckungsgleich übereinandergelegt. Dazu sind das erste Werkstück 1 und das zweite Werkstück 2 bevorzugt in Form und Größe zumindest entlang einer Seitenfläche gleich ausgestaltet bzw. dimensioniert. Weiterhin ist vorgesehen, dass das erste Werkstück 1 und das zweite Werkstück 2, zumindest entlang der Seitenflächen, über die das erste Werkstück 1 und das zweite Werkstück 2 im provisorischen Verbund 5 in Kontakt treten, gereinigt werden, insbesondere gestrahlt werden, zeitlich bevor sie aneinandergelegt werden. Für die Qualität des gefertigten Werkstoffverbunds ist es von entscheidender Bedeutung, dass zwischen das erste Werkstück 1 und das zweite Werkstück 2 keine Luft eintritt, die eine Zunderbildung fördert bzw. veranlasst. Daher sieht es der Stand der Technik vor, dass das erste Werkstück 1 und das zweiten Werkstück 2 umlaufend miteinander verschweißt werden, damit keine Luft in einen Zwischenraum zwischen dem ersten Werkstück 1 und dem zweiten Werkstück 2 gelangen kann. Zudem sichert eine derartige Verschweißung, dass das erste Werkstück 1 und das zweite Werkstück 2 zusammengehalten werden, wenn sie zum Warmwalzen, d. h. zu einer für das Warmwalzen vorgesehenen Vorrichtung, transportiert werden. In der dargestellten Ausführungsform werden ein erstes Werkstück 1, ein zweites Werkstück 2 und ein drittes Werkstück 3 in einem Brammenpaket miteinander verbunden, wobei jeweils eine stoffschlüssige Verbindung zwischen dem ersten und dem zweiten Werkstück 1 und 2 sowie zwischen dem zweiten Werkstück 2 und dem dritten Werkstück 3 vorgesehen ist. Allerdings hat das vollständige Verschweißen im Sinne des Stands der Technik den Nachteil, dass mögliche Lufteinschlüsse zu einer Blasenbildung im Werkstoffverbund führen können. Zur Unterdrückung dieser Blasenbildung ist es gemäß der beispielhaften Ausführungsform der vorliegenden Erfindung vorgesehen, dass eine stoffschlüssige Verbindung 10 erzeugt wird, die derart ausgestaltet wird, dass die stoffschlüssige Verbindung 10 im Sinne einer Sollbruchstelle beim Walzen, insbesondere Warmwalzen, zumindest teilweise gelöst wird. Durch das Lösen der stoffschlüssigen Verbindung 10 kann die eingeschlossene Luft beim Walzen wieder aus der geöffneten Sollbruchstelle herausgedrückt werden und es lässt sich ein im Wesentlichen blasenfreier und damit qualitativ hochwertiger Werkstoffverbund realisieren. Insbesondere ist dafür vorgesehen, dass die stoffschlüssige Verbindung derart konfiguriert wird, dass eine Belastungsfähigkeit, insbesondere eine Reißfestigkeit, der stoffschlüssigen Verbindung 10 entlang der stoffschlüssigen Verbindung 10 moduliert. D. h. die stoffschlüssige Verbindung 10 umfasst einen Bereich mit einer ersten Belastungsfähigkeit 11 und einen Bereich mit einer zweiten Belastungsfähigkeit 12, wobei sich die erste Belastungsfähigkeit 11 von der zweiten Belastungsfähigkeit 12 unterscheidet. Beispielsweise gibt der Bereich mit der ersten Belastungsfähigkeit 11 im Vergleich zum Bereich mit der zweiten Belastungsfähigkeit 12 bei geringeren Scher- oder Zugkräften nach und bildet dadurch die Sollbruchstelle. In der dargestellten beispielhaften Ausführungsform umfasst die stoffschlüssige Verbindung 10 zusätzlich noch einen Bereich mit einer dritten Belastungsfähigkeit 13. Zur Einstellung der Belastungsfähigkeit wird die stoffschlüssige Verbindung 10 beispielsweise mehrlagig oder in ihrer Dicke moduliert. Weiterhin ist es vorstellbar, dass der provisorische Verbund 5 Bereiche ohne stoffschlüssige Verbindung 10 aufweist und diese Bereiche zum hermetischen Versiegeln des provisorischen Verbunds 5 mit einem, insbesondere hitzebeständigen, Dichtmittel abgedichtet werden. Beispielsweise wird eine Paste, eine Schlichte und/oder Lack im Bereich ohne stoffschlüssige Verbindung 10 angeordnet.

In **Figur 2** ist eine beispielhafte stoffschlüssige Verbindung 10 für einen provisorischen Verbund 5 gemäß der beispielhaften Ausführungsform der vorliegenden Erfindung dargestellt. Dabei ist es bevorzugt vorgesehen, dass die stoffschlüssige Verbindung 10 zwischen dem ersten Werkstück 1 und dem zweiten Werkstück 2 als Verschweißung, beispielsweise unter Bildung von Schweißraupen, realisiert wird. Weiterhin ist es vorstellbar, dass in einem zusammengesetzten Zustand das erste Werkstück 1 und das zweite Werkstück 2 eine Aufnahme 6 für ein Verbindungsmaterial bereitstellen, beispielsweise indem jeweilige Kerben bzw. Kantenverläufe im ersten Werkstück 1 und im zweiten Werkstück 2 im zusammengesetzten Zustand die Aufnahme 6 bilden. Vorzugsweise ist es vorgesehen, dass die stoffschlüssige Verbindung 10, beispielsweise in Form von mehreren übereinanderliegenden Schweißraupen, mehrlagig ausgestaltet wird, d. h. ein Verbindungsmaterial, beispielsweise ein Schweißmaterial, in mehreren Lagen aufgetragen wird. Zur Modulation der Belastungsfähigkeit entlang der stoffschlüssigen Verbindung, insbesondere der Verschweißung, wird vorzugsweise die Anzahl der übereinanderliegenden stoffschlüssigen Verbindungen bzw. die Anzahl der Lagen des Verbindungsmaterials variiert, vorzugsweise periodisch moduliert. In einem ersten Beispiel für die stoffschlüssige Verbindung werden eine erste Lage 31 und eine zweite Lage 32 des Verbindungsmaterials vollständig entlang der Kontaktfläche zwischen dem ersten Werkstück 1 und dem zweiten Werkstück 2 umlaufend angeordnet und partiell von einer dritten Lage 33 des Verbindungsmaterials bedeckt. In einem zweiten Beispiel wird die erste Lage 31 des Verbindungsmaterials vollständig entlang der Kontaktfläche zwischen dem ersten Werkstück 1 und den zweiten Werkstück 2 umlaufend angeordnet und von der zweiten Lage 32 und/oder der dritten Lage 33 des Verbindungsmaterials partiell bedeckt. In einem dritten Beispiel werden die erste Lage 31, die zweite Lage 32 und/oder die dritte Lage 33 des Verbindungsmaterials entlang der Kontaktfläche zwischen dem ersten und den zweiten Werkstück jeweils partiell angeordnet. Etwaige Bereiche ohne Verbindung 10 entlang des am Rand der Kontaktfläche verlaufenden Umfangs werden bevorzugt mit dem hitzebeständigen Dichtmittel versiegelt.

### Bezugszeichenliste

- 1: erstes Werkstück
- 2: zweites Werkstück
- 3: drittes Werkstück
- 5: provisorischer Verbund
- 6: Aufnahme
- 10: stoffschlüssige Verbindung
- 11: erste Belastungsfähigkeit
- 12: zweite Belastungsfähigkeit
- 13: dritte Belastungsfähigkeit
- 31: erste Lage
- 32: zweite Lage
- 33: dritte Lage

## Patentansprüche

1. Verfahren zum Herstellen eines Werkstoffverbunds, insbesondere eines Stahlwerkstoffverbunds, aufweisend die Verfahrensschritte:
-- Bereitstellen eines ersten Werkstücks (1) und eines zweiten Werkstücks (2),
-- Erzeugen einer stoffschlüssigen Verbindung (10) zwischen dem ersten Werkstück (1) und dem zweiten Werkstück (2) zur Bildung eines provisorischen Verbunds (5) und
-- Walzen, insbesondere Warmwalzen, des provisorischen Verbunds (5) zur Bildung des Werkstoffverbunds,
wobei dadurch die stoffschlüssige Verbindung (10) als Sollbruchstelle beim Walzen zumindest teilweise gelöst wird.

2. Verfahren gemäß Anspruch 1, wobei der provisorische Verbund (5) mittels eines Dichtmittels im Wesentlichen hermetisch abgedichtet wird.

3. Verfahren gemäß einem der vorhergehenden Ansprüche, wobei das erste Werkstück (1) und das zweite Werkstück (2) unter Bildung einer Kontaktfläche zueinander angeordnet werden und vorzugsweise entlang eines Randbereichs der Kontaktfläche umlaufend miteinander stoffschlüssig verbunden, insbesondere verschweißt, werden.

4. Verfahren gemäß einem der vorhergehenden Ansprüche, wobei zur Realisierung der Sollbruchstelle eine Belastungsfähigkeit der stoffschlüssigen Verbindung (10) räumlich moduliert wird.

5. Verfahren gemäß einem der vorhergehenden Ansprüche, wobei zum Erzeugen der stoffschlüssigen Verbindung (10) ein Verbindungsmaterial verwendet wird.

6. Verfahren gemäß Anspruch 5, wobei das Verbindungsmaterial zum Erzeugen der stoffschlüssigen Verbindung (10) zumindest teilweise mehrlagig aufgetragen wird.

7. Verfahren gemäß Anspruch 6, wobei mittels einer Anzahl an Lagen von Verbindungsmaterial entlang der stoffschlüssigen Verbindungen (10) die Belastungsfähigkeit moduliert wird.

8. Verfahren gemäß einem der vorhergehenden Ansprüche, wobei das erste Werkstück (1) und/oder das zweite Werkstück (2) zeitlich vor dem Erzeugen der stoffschlüssigen Verbindung zumindest teilweise gereinigt werden.

## Claims

1. Method for producing a composite material, in particular a steel composite material, comprising the following method steps:
-- providing a first workpiece (1) and a second workpiece (2),
-- producing a bonded connection (10) between the first workpiece (1) and the second workpiece (2) to form a provisional composite (5) and
-- rolling, in particular hot rolling, the provisional composite (5) to form the composite material,
wherein in that, during the rolling, the bonded connection (10) is at least partially broken as a predetermined breaking point.

2. Method according to Claim 1, wherein the provisional composite (5) is substantially hermetically sealed by means of a sealant.

3. Method according to either of the preceding claims, wherein the first workpiece (1) and the second workpiece (2) are arranged in relation to one another to form a contact area and are preferably connected to one another in a bonding manner, in particular welded, peripherally along an edge region of the contact area.

4. Method according to one of the preceding claims, wherein a loading capacity of the bonded connection (10) is spatially modulated to create the predetermined breaking point.

5. Method according to one of the preceding claims, wherein a connecting material is used to produce the bonded connection (10).

6. Method according to Claim 5, wherein the connecting material is at least partially applied in multiple layers to produce the bonded connection (10).

7. Method according to Claim 6, wherein the loading capacity is modulated by means of a number of layers of connecting material along the bonded connections (10) .

8. Method according to one of the preceding claims, wherein the first workpiece (1) and/or the second workpiece (2) are at least partially cleaned at a time before producing the bonded connection.

## Revendications

1. Procédé de fabrication d'un composite de matériaux, notamment d'un composite de matériaux à base d'acier, comprenant les étapes suivantes :
- fourniture d'une première pièce ouvrée (1) et d'une deuxième pièce ouvrée (2),
- production d'une liaison par fusion de matières (10) entre la première pièce ouvrée (1) et la deuxième pièce ouvrée (2) en vue de former un composite provisoire (5) et
- laminage, notamment laminage à chaud, du composite provisoire (5) en vue de former le composite de matériaux, en ce que la liaison par fusion de matières (10), en tant que point de rupture voulu, étant de ce fait au moins partiellement détachée lors du laminage.

2. Procédé selon la revendication 1, le composite provisoire (5) étant rendu sensiblement hermétiquement étanche au moyen d'un agent d'étanchéité.

3. Procédé selon l'une des revendications précédentes, la première pièce ouvrée (1) et la deuxième pièce ouvrée (2) étant disposées l'une par rapport à l'autre en formant une surface de contact et étant liées par fusion de matières, notamment soudées, l'une à l'autre de manière circonférentielle, de préférence le long d'une zone de bordure de la surface de contact.

4. Procédé selon l'une des revendications précédentes, une capacité de charge de la liaison par fusion de matières (10) étant modulée dans l'espace en vue de réaliser le point de rupture voulu.

5. Procédé selon l'une des revendications précédentes, un matériau de liaison étant utilisé pour produire la liaison par fusion de matières (10).

6. Procédé selon la revendication 5, le matériau de liaison destiné à produire la liaison par fusion de matières (10) étant appliqué au moins partiellement en plusieurs couches.

7. Procédé selon la revendication 6, la capacité de charge étant modulée au moyen d'un nombre de couches de matériau de liaison le long de la liaison par fusion de matières (10).

8. Procédé selon l'une des revendications précédentes, la première pièce ouvrée (1) et/ou la deuxième pièce ouvrée (2) étant au moins partiellement nettoyées chronologiquement avant de produire la liaison par fusion de matières.
